# EUROPÄISCHE PATENTANMELDUNG

(11) **EP 1 561 956 A1**
(43) Veröffentlichungstag der Anmeldung: **10.08.2005**
(21) Anmeldenummer: 05100658.3
(22) Anmeldetag: 01.02.2005
(51) Int. Cl.: F16B 7/04, E04B 9/12

(54) **Verbindungsvorrichtung**

(30) Priorität: 09.02.2004 DE 102004006211
(71) Anmelder: HILTI Aktiengesellschaft, 9494 Schaan (LI)
(72) Erfinder: Herb, Armin, 86974 Apfeldorf (DE)
(74) Vertreter: Wildi, Roland

(57) **Zusammenfassung**

Eine Verbindungsvorrichtung (1) zum Verbinden von Montageschienen (2,3,4) umfasst ein Mittelteil (11) und zwei, mit dem Mittelteil (11) verbindbare Aufnahmeelemente (26). Das Mittelteil (11) ist U-förmig zum Umgreifen einer ersten Montageschiene (2) ausgebildet. Die Aufnahmeelemente (26) sind ebenfalls U-förmig ausgebildet und bilden je eine Aufnahme für eine mit der ersten Montageschiene (2) zu verbindende Montageschiene (3,4). An den Schenkeln (12) des Mittelteils (11) sind mehrere zueinander beabstandete und einander gegenüberliegende Elementaufnahmen (18) für die Aufnahme der Aufnahmeelemente (26) vorgesehen. Die Aufnahmeelemente (26) sind über eine Einrenkverbindung mit dem Mittelteil (11) verbindbar.

## Beschreibung

### Technisches Gebiet

Die Erfindung betrifft eine Verbindungsvorrichtung zum Verbinden von Montageschienen im Kreuzstoss mit einem Mittelteil und mit zumindest einem, mit dem Mittelteil verbindbaren Aufnahmeelement. Das Mittelteil weist zwei im Wesentlichen parallel zueinander ausgerichtete Schenkel und einen die beiden Schenkel verbindenden Verbindungsabschnitt zum zumindest teilweisen Umgreifen einer ersten Montageschiene auf. Das zumindest eine Aufnahmeelement weist zwei im Wesentlichen parallel zueinander ausgerichtete Schenkel und einen die beiden Schenkel verbindenden Verbindungsabschnitt auf. In das Aufnahmeelement ist eine zweite, mit der ersten Montageschiene auf Stoss zu befestigende Montageschiene einlegbar. An zumindest einem der Schenkel des Mittelteils sind mehrere zueinander beabstandete und einander gegenüberliegende Elementaufnahmen für die Aufnahme des zumindest einen Aufnahmeelementes vorgesehen.

### Stand der Technik

Montageschienen an sich sind bekannt und dienen beispielsweise der Befestigung von Anbindeteilen oder Leitungssträngen. Infolge der Vielzahl der Verwendungsmöglichkeiten der Montageschienen werden diese über Verbindungsteile und -vorrichtungen auch zu Tragwerken zusammengestellt.

Beispielsweise werden in Stahl- und Stahlbetonhallen zur Schaffung von flexiblen Anbindemöglichkeiten an die oftmals umfangreiche Haustechnik und an die Prozessmedien, wie beispielsweise Strom, Druckluft und Wasser, Zwischenebenen in Form einer Rasterdecke aus Montageschienen erstellt, welche von den Dachträgern der Halle abgehängt werden. Mittels Montageschienen erstellte Rasterdecken können einfach an sich ändernde Belastungen, z. B. durch Anordnung von schweren Leitungen oder infolge von statischen Erfordernissen, durch Austausch der entsprechenden Montageschienen angepasst werden.

Üblicherweise umfassen die Rasterdecken in einer Richtung angeordnete Hauptträger, zwischen welchen Abschnitte von Montageschienen als Querträger im Kreuzstoss, z. B. als Auflager oder zur Versteifung der Rasterdecke, angeordnet werden. Rasterdecken wie auch andere mittels Montageschienen erstellte Tragwerke bieten eine Vielzahl von Möglichkeiten zur Befestigung beispielsweise von Rohrleitungen an den Montageschienen mit bekannten Anbindeteilen, wie Winkel oder Rohrschellen.

Aus der DE 100 00 92 A1 ist eine Verbindungsvorrichtung zum Verbinden von Montageschienen im Kreuzstoss bekannt, wobei die Verbindungsvorrichtung einen U-förmigen Mittelteil zum Umgreifen einer ersten Montageschiene und zumindest ein an einem Schenkel des Mittelteils fest angeordnetes U-förmiges Aufnahmeelement umfasst, in das eine zweite, mit der ersten Montageschiene auf Stoss zu befestigende Montageschiene einlegbar ist. Die Verbindungsvorrichtung umfasst weiter als Fixierelement für die zu befestigende Montageschiene einen Bügel, der an Hinterschneidungen an den freien Rändern der Schenkel des Aufnahmeelementes festlegbar ist und mittels einer als Befestigungsmittel ausgebildeten Schienenmutter die zweite Montageschiene mit der Verbindungsvorrichtung verspannt.

Nachteilig an der bekannten Lösung ist, dass nur Montageschienen, die eine bestimmte Höhe aufweisen, mittels dieser Verbindungsvorrichtung mit einer Montageschiene im Kreuzstoss verbindbar sind. Für unterschiedliche Montageschienen mit verschiedenen Höhenabmessungen ist eine Vielzahl von unterschiedlich ausgebildeten Verbindungsvorrichtungen erforderlich, welche aufwändig in der Herstellung sind und einen grossen logistischen Aufwand beim Hersteller, Händler sowie auch beim Anwender bedingen. Wird die bekannte Verbindungsvorrichtung z. B. zur Erstellung einer abgehängten Rasterdecke verwendet, so kann beim Verbinden unterschiedlich hoher Montageschienen keine durchgehend flache untere oder obere Auflagefläche der Rasterdecke, beispielsweise für ein Verlegen von Leitungen in einer im Wesentlichen geraden Ebene oder für die Anordnung von Gips-, Verkleidungs- oder Akustikplatten, geschaffen werden.

Aus der EP 1 201 936 A2 ist eine Verbindungsvorrichtung zum Verbinden von Montageschienen im Kreuzstoss bekannt, wobei die Verbindungsvorrichtung ein oder mehrere U-förmige Mittelteile zum Umgreifen einer ersten Montageschiene und zumindest ein, an einem Schenkel der Mittelteile mittels einer Rastverbindung lösbar mit den Mittelteilen verbindbares, U-förmiges Aufnahmeelement umfasst, in das eine zweite, mit der ersten Montageschiene auf Stoss zu befestigende Montageschiene einlegbar ist. Mit einem weiteren Aufnahmeelement kann mittels einer als Befestigungsmittel ausgebildeten Schienenmutter die zweite Montageschiene mit der Verbindungsvorrichtung verspannt werden. Die Rastverbindung umfasst vier, um ein Innengewinde angeordnete Elementaufnahmen an jedem Schenkel des Mittelteils und vier, mit diesen Elementaufnahmen in Eingriff bringbare Zapfen an dem Aufnahmeelement. Mittels der Rastverbindung lässt sich das Aufnahmeelement jeweils um 90° um die Achse des Innengewindes verdreht am Schenkel des Mittelteils anordnen.

Nachteilig an der bekannten Lösung ist, dass für das Verbinden von unterschiedlichen Montageschienen mit verschiedenen Höhenabmessungen mehrere Mittelteile an einer ersten Montageschiene angeordnet werden müssen, was beispielsweise bei einer im Wesentlichen horizontal ausgerichteten Rasterdecke ohne zusätzlich an der Rasterdecke angeordnete Vertikalabschnitte von Montageschienen nicht möglich ist. Des Weiteren können mit der bekannten Verbindungsvorrichtung bei Verwendung von unterschiedlich hohen Montageschienen nur Rasterdecke mit einer unteren, flachen Auflagefläche, beispielsweise für die Anordnung von Gips- oder Verkleidungsplatten, erstellt werden. Ein Verlegen von Leitungen in einer im Wesentlichen geraden Ebene direkt auf der erstellten Rasterdecke bei Verwendung von unterschiedlich hohen Montageschienen ist mit dieser Verbindungsvorrichtung nicht möglich.

### Darstellung der Erfindung

Aufgabe der Erfindung ist es, eine Verbindungsvorrichtung zu schaffen, die den Anschluss von Montageschienen erlaubt, die unterschiedliche Höhen aufweisen können, und flexibel in der Anwendung ist.

Die Aufgabe ist durch die Merkmale des unabhängigen Anspruchs gelöst. Vorteilhafte Weiterbildungen sind in den Unteransprüchen dargelegt.

Gemäss der Erfindung ist das zumindest eine Aufnahmeelement über eine Einrenkverbindung mit dem Mittelteil verbindbar.

Das Mittelteil umfasst durch seine im Wesentlichen U-förmige Ausgestaltung zumindest teilweise die erste Montageschiene, an welche eine weitere Montageschiene über die erfindungsgemässe Verbindungsvorrichtung abgeschlossen werden soll. Zur Positionierung des Mittelteils kann dieses entlang der ersten Montageschiene verschoben und anschliessend mittels zumindest eines Befestigungsmittels in der gewünschten Position fixiert werden. Der Verbindungsabschnitt des Mittelteils weist z. B. eine oder mehrere Durchführöffnungen auf, in welche das zumindest eine Befestigungsmittel zur Fixierung des Mittelteils an der ersten Montageschiene angeordnet werden kann oder vorgängig angeordnet wurde.

Die an dem zumindest einen Schenkel des Mittelteils zueinander beabstandeten und einander gegenüberliegend angeordneten Elementaufnahmen sind in verschiedenen Abständen zum Verbindungsabschnitt des Mittelteils für die Aufnahme des zumindest einen Aufnahmeelementes vorgesehen, wobei die Abstände im Wesentlichen auf die Höhen der mit der Verbindungsvorrichtung zu verspannenden Montageschienen abgestimmt sind. Die zueinander beabstandeten und einander gegenüberliegenden Elementaufnahmen sind vorteilhafterweise im Wesentlichen parallel zu der, von dem Verbindungsabschnitt des Mittelteils gebildeten Ebene ausgerichtet und als Durchbrüche mit stirnseitigen Rändern ausgebildet. Die Elementaufnahmen weisen beispielsweise einen rechteckigen Querschnitt oder einen kreisförmigen Querschnitt auf.

Das zumindest eine Aufnahmeelement weist im Querschnitt eine im Wesentlichen U-förmige Ausgestaltung auf. Die mit der ersten Montageschiene zu verbindende, weitere Montageschiene wird vorzugsweise von oben her in das zumindest eine Aufnahmeelement eingelegt und ist in dieser Position gehalten. Das zumindest eine Aufnahmeelement wird in die Elementaufnahmen an dem zumindest einen Schenkel des Mittelteils eingerenkt, welche der gewünschten Höhenausrichtung der, in das zumindest eine Aufnahmeelement eingelegten Montageschiene am nächsten liegt.

Um die Flexibilität der erfindungsgemässen Verbindungsvorrichtung weiter zu verbessern, sind an beiden Schenkeln des Mittelteils zueinander beabstandeten und einander gegenüberliegend angeordneten Elementaufnahmen in verschiedenen Abständen zum Verbindungsabschnitt des Mittelteils für die Aufnahme von zwei Aufnahmeelementen an dem Mittelteil vorgesehen, wobei die Elementaufnahmen an den beiden Schenkeln vorteilhafterweise gleichartig ausgebildet sind. Die Aufnahmeelemente können im gleichen Abstand zum Verbindungsabschnitt des Mittelteils oder auch an den beiden Schenkeln des Mittelteils in unterschiedlichen Abständen zum Verbindungsabschnitt des Mittelteils eingerenkt werden. Diese Ausgestaltung der erfindungsgemässen Verbindungsvorrichtung ermöglicht die Anordnung zweier, einander gegenüberliegender Montageschienen an einer ersten Montageschiene, beispielsweise zum Erstellen einer Rasterdecke. In die Aufnahmeelemente können beidseitig gleich hohe Montageschienen oder Montageschienen mit unterschiedlichen Höhen eingelegt werden.

Bevorzugt ist jeweils zumindest ein Einrenkmittel an jedem Schenkel des zumindest einen Aufnahmeelementes vorgesehen, wobei die Einrenkmittel einander gegenüberliegend angeordnet sind und eine im Wesentlichen hakenförmige Ausgestaltung für ein Hintergreifen des zumindest einen Schenkels des Mittelteils zur Schaffung der Einrenkverbindung mit dem Mittelteil aufweisen. Der Abstand der einander gegenüberliegenden Einrenkmittel ist auf den Abstand der einander gegenüberliegenden, voneinander beabstandeten Elementaufnahmen für das zumindest eine Aufnahmeelement an dem zumindest einen Schenkel des Mittelteils abgestimmt. Mittels Einrenken der Einrenkmittel des Aufnahmeelementes in die Elementaufnahmen an dem einen Schenkel des Mittelteils wird die Einrenkverbindung zwischen dem Aufnahmeelement und dem Mittelteil geschaffen, wobei die Einrenkmittel vorteilhafterweise im Bereich des dem Verbindungsabschnitts des Aufnahmeelementes abgewandten Endes der Schenkel des Aufnahmeelementes vorgesehen sind. Vorzugsweise ist das freie Ende des hakenförmig ausgestalteten Einrenkmittels von der Ebene, die durch den Verbindungsabschnitt des Aufnahmeelementes gebildet wird, abgewandt ausgerichtet. Nach dem Einführen des freien Endes des hakenförmig ausgestalteten Einrenkmittels in die Elementaufnahmen kann das Aufnahmeelement durch eine rotatorische Bewegung um das Einrenkmittel mit dem Schenkel des Mittelteils beziehungsweise mit der Seitenwand der ersten Montageschiene in Anlage gebracht werden, wobei die verbindende Abschnitte der freien Enden der Eingreifmittel zu den Schenkeln des Anlageelementes das Auflager des Auflageelementes an dem Mittelteil bilden. Die Eingreifmittel hintergreifen dabei zumindest bereichsweise die stirnseitigen Ränder der Elementaufnahmen.

Vorteilhafterweise sind die Einrenkmittel an einem Rand der Schenkel des Aufnahmeelementes und jeweils in der, von den Schenkeln gebildeten Ebene angeordnet. Diese Anordnung der Einrenkmittel ermöglicht eine einfache und kostengünstige Fertigung der Aufnahmeelemente in einem Stanz-/Biegeverfahren. Des Weiteren stehen bei dieser Ausführung des Aufnahmeelementes keine Materialabschnitte über die, von den Schenkeln des Aufnahmeelementes gebildeten Ebene vor oder verkleinern partiell den von dem Aufnahmeelement gebildeten Aufnahmeraum, womit die Montage der Verbindungsvorrichtung und der mit der ersten Montageschiene zu verbindenden weiteren Montageschienen wesentlich erleichtert ist.

Vorzugsweise sind mehrere Eingreifmittel an den Schenkeln des zumindest einen Aufnahmeelementes zur Schaffung einer Rastverbindung zwischen dem zumindest einen Aufnahmeelement und dem Mittelteil vorgesehen, wobei die Eingreifmittel vorzugsweise zapfenförmig ausgebildet und an den Rändern der Schenkel des zumindest einen Aufnahmeelementes vorgesehen sind. Die Eingreifmittel sind derart zueinander und zu den Einrenkmitteln an den Schenkeln des Aufnahmeelementes sowie einander gegenüberliegend angeordnet, dass diese in die Elementaufnahmen für die Einrenkmittel an dem zumindest einen Schenkel des Mittelteils zur Schaffung der Rastverbindung eindringen können beziehungsweise bei einer Anordnung des Aufnahmeelementes an den unteren Elementaufnahmen an dem Schenkel des Mittelteils ausserhalb des, dem Verbindungsabschnitt des Mittelteils abgewandten, freien Endes des Schenkels des Mittelteils zu liegen kommen. Unter zapfenförmig wird beispielsweise eine kreiszylindrische oder quaderförmige Ausgestaltung der Eingreifmittel verstanden. Des Weiteren können die Eingreifmittel in Richtung von deren freien Enden auch trapezförmig oder konisch verlaufend ausgebildet sein, was insbesondere beim Einrenken des Aufnahmeelementes in das Mittelteil das Eindringen der Eingreifmittel in die Elementaufnahmen des Schenkels des Mittelteils erleichtert.

Bevorzugt beinhaltet die Verbindungsvorrichtung weiter ein Fixierelement, das an dem Mittelteil der Verbindungsvorrichtung festlegbar ist und mittels eines Befestigungsmittels die zweite Montageschiene mit der Verbindungsvorrichtung verspannt, wobei an zumindest einem der Schenkel des Mittelteils mehrere zueinander beabstandete und schlitzartig ausgebildete Fixieraufnahmen für das Fixierelement zur Fixierung von in der Höhe unterschiedlich ausgebildeten und in das zumindest eine Aufnahmeelement eingelegten Montageschienen vorgesehen sind, wobei das Fixierelement mittels einer Einrenkverbindung mit dem Mittelteil verbindbar ist. Die Fixierelemente weisen beispielsweise einen im Wesentlichen rechteckigen Querschnitt auf und sind als Durchbrüche mit stirnseitigen Rändern ausgebildet. Infolge der Einrenkverbindung zwischen dem Mittelteil und dem Fixierelement ist diese Verbindung in eine Richtung senkrecht von der, von dem Schenkel des Mittelteils gebildeten Ebene gesichert. Die in das Aufnahmeelement eingelegte Montageschiene wird über das Fixierelement, das in die Fixieraufnahme am Schenkel des Mittelteils eingerenkt wird, welche der freien Seite, an welcher das eingerenkte Fixierelement zu liegen kommt, der eingelegten Montageschiene am nächsten liegt, mittels des Befestigungsmittels mit der Verbindungsvorrichtung verspannt.

Neben einem Einlegen der Montageschiene von oben her in das Aufnahmeelement kann die anzuschliessende Montageschiene auch seitlich oder von unten her in das zumindest eine, entsprechend an einem der Schenkel des Mittelteils ausgerichtete Aufnahmeelement eingelegt und über das Fixierelement mit der Verbindungsvorrichtung verspannt werden.

Das Befestigungsmittel für das Fixierelement umfasst beispielsweise eine Schraube und eine als Hintergreifteil ausgebildete Mutter zum Hintergreifen der freien Ränder der Montageschiene oder eine so genannte Schienenmutter. Das Befestigungsmittel wird zur Fixierung der zweiten Montageschiene an der Verbindungsvorrichtung durch eine Durchführöffnung am Fixierelement hindurchgeführt oder ist vorgängig an dem Fixierelement vorgesehen.

Bevorzugt weist das Fixierelement einen Einrenkabschnitt, zur Schaffung der Einrenkverbindung zwischen dem Fixierelement und dem Mittelteil, und einen Anlageabschnitt auf, zur Anlage des Fixierelementes an der zu verbindenden Montageschiene. Der Einrenkabschnitt ist optional hakenförmig ausgestaltet und vorzugsweise von der Seite des Anlageabschnitts abgewandt, an welcher ein Angreifmittel für das Befestigungsmittel anliegt. Der Einrenkabschnitt des Fixierelementes wird in die Fixieraufnahme am Schenkel des Mittelteils eingeführt, welche der in das Aufnahmeelement eingelegten und zu fixierenden Montageschiene am nächsten liegt, und der Anlageabschnitt mittels einer rotatorischen Bewegung in Richtung der in das Aufnahmeelement eingelegten Montageschiene mit dieser in Anlage gebracht. Mittels Betätigung des Befestigungsmittels über das Angreifmittel wird diese Montageschiene mit der Verbindungsvorrichtung lösbar verspannt.

Vorteilhafterweise weist der Einrenkabschnitt eine kleinere Breite als die Breite des Anlageabschnitts auf. Die Breite des Einrenkabschnitts entspricht maximal der lichten Breite zwischen den Schenkeln des Aufnahmeelementes. Für eine materialsparende Ausbildung des Fixierelementes entspricht die Breite des Einrenkabschnitts bevorzugt der Breite der Fixieraufnahmen in dem zumindest einen Schenkel des Mittelteils. Die Breite des Anlageabschnitts entspricht im Wesentlichen der Gesamtbreite der Montageschiene.

Vorzugsweise ist der Einsteckabschnitt gegenüber einer Ebene, die durch den Anlageabschnitt gebildet ist, in einem Winkel α von 0°bis 25°, vorzugsweise in einem Winkel α von 5° bis 15°, abgewinkelt. Der Einrenkabschnitt des Fixierelementes kann, abgesehen vom freien Ende der hakenförmigen Ausgestaltung, in der gleichen Ebene wie der Anlageabschnitt des Fixierelementes liegen. Die Durchführöffnung für das Befestigungsmittel zur Fixierung der eingelegten Montageschiene an der Verbindungsvorrichtung ist vorzugsweise im Anlageabschnitt ausgebildet. Durch eine winklige Anordnung des Einsteckabschnitts zum Anlageabschnitt wird eine zusätzliche Verspannkraft auf die Verbindung zwischen der Verbindungsvorrichtung und der eingelegten Montageschiene beim Verspannen des Befestigungsmittels erzeugt, was die Sicherheit dieser Verbindung zusätzlich erhöht. Mit diesem Fixierelement können Fertigungstoleranzen der Verbindungsvorrichtung sowie zwischen der Verbindungsvorrichtung und der eingelegten Montageschiene ausgeglichen werden.

Bevorzugt weist das Mittelteil an dessen Verbindungsabschnitt eine Aufnahme für ein Abspannelement auf, wobei die Aufnahme vorzugsweise einen Gewindeabschnitt aufweist. Wird die erfindungsgemässe Verbindungsvorrichtung zum Erstellen von einer an der Tragkonstruktion eines Gebäudes abgehängten Zwischenebene verwendet, z. B. in Form einer Rasterdecke oder dergleichen, dient die Aufnahme der Anordnung eines der Abspannelemente dieser Abhängung. Der Gewindeabschnitt ist auf den Anschlussbereich am Abspannmittel abgestimmt. Weist dieser Anschlussbereich beispielsweise einen Gewindeabschnitt mit einem Aussengewinde auf, so ist der Gewindeabschnitt der Aufnahme als Innengewinde ausgebildet, welches mit dem Aussengewinde des Anschlussbereiches in Eingriff bringbar ist. Weist dieser Anschlussbereich dagegen einen Gewindeabschnitt mit einem Innenengewinde auf, so ist der Gewindeabschnitt der Aufnahme entsprechend als mit diesem Innengewinde in Eingriff bringbares Aussengewinde ausgebildet. In einer Variante dazu ist die Aufnahme am Verbinder mit einer Reibschlussvorrichtung versehen, in welche der Anschlussbereich des Abspannmittels einsteckbar ist.

Vorteilhafterweise sind an den Schenkeln des Mittelteils einander zugewandte Distanzabschnitte zur Schaffung eines Freiraums für die Einrenkmittel eines mit dem Mittelteil verbindbaren Aufnahmeelementes ausgebildet sind. Die Erstreckung der Distanzabschnitte ist derart gross gewählt, dass der geschaffene Freiraum zwischen der inneren Seitenfläche der Schenkel des Mittelteils und der Aussenseite der ersten Montageschiene ein einwandfreies Einrenken der Einrenkmittel des Aufnahmeelementes beziehungsweise des Einrenkabschnitts des Fixierelementes ermöglicht. Damit wird ein das Einrenken behindernden Kontakt zwischen dem Einrenkmittel beziehungsweise zwischen dem Einrenkabschnitt und einer der Seitenwände der ersten, von dem Mittelteil zumindest teilweise umfassten Montageschiene verhindert.

Die erfindungsgemässe Verbindungsvorrichtung und deren Teile sind vorzugsweise aus Metall, beispielsweise in einem Stanz-/Biegeverfahren gefertigt. Bei einer Verwendung der Verbindungsvorrichtung z. B. in chemisch aggressiver Umgebung werden die einzelnen Teile vorzugsweise aus einem korrossionsbeständigem Material hergestellt. Alternativ dazu können die einzelnen Teile der gesamten Verbindungsvorrichtung aus einem geeigneten Kunststoff gefertigt sein.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die Erfindung wird nachstehend anhand mehrerer Ausführungsbeispiele näher erläutert. Es zeigen:
- Fig. 1: Ein Anwendungsbeispiel einer erfindungsgemässen Verbindungsvorrichtung in Schnittdarstellung;
- Fig. 2: ein weiteres Anwendungsbeispiel einer erfindungsgemässen Verbindungsvorrichtung in Schnittdarstellung;
- Fig. 3: eine Seitenansicht auf einen Schenkel eines Mittelteils;
- Fig. 4: eine andere Seitenansicht auf das in Fig. 3 gezeigte Mittelteil;
- Fig. 5: eine Seitenansicht auf ein Aufnahmeelement;
- Fig. 6: eine Seitenansicht auf ein Fixierelement;
- Fig. 7: ein weiteres Anwendungsbeispiel einer Verbindungsvorrichtung im Grundriss; und
- Fig. 8a,b: das Einrenken eines Aufnahmeelements an einem Mittelteil in zwei Montagezuständen.

Grundsätzlich sind in den Figuren gleiche Teile mit den gleichen Bezugszeichen versehen.

### Wege zur Ausführung der Erfindung

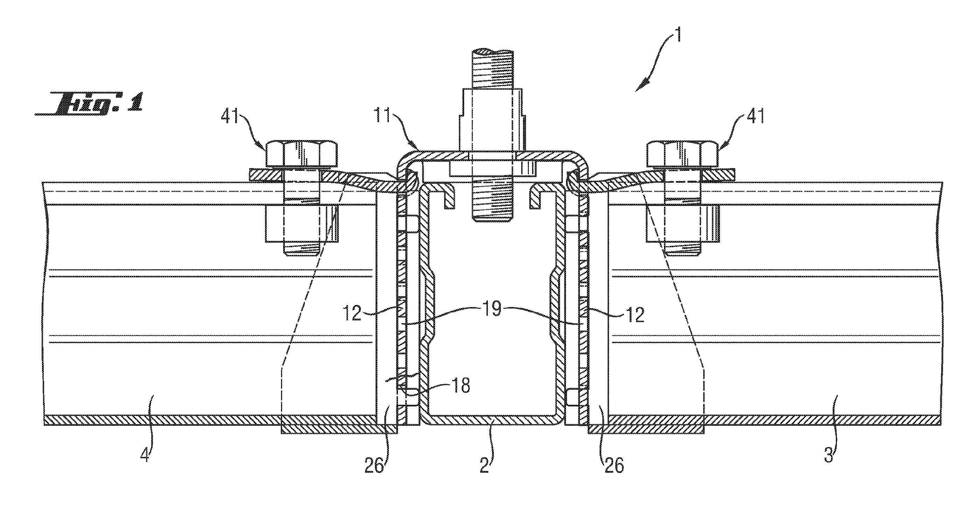

Die in der Figur 1 gezeigte Verbindungsvorrichtung 1 zum Verbinden zweier Montageschienen 3 und 4 an der Montageschiene 2 umfasst ein Mittelteil 11 und zwei Aufnahmeelemente 26 sowie zwei, in das Mittelteil 11 einrenkbare Fixierelemente 41. Alle zu verbindenden Montageschienen 2, 3 und 4 weisen die gleiche Höhenerstreckung auf.

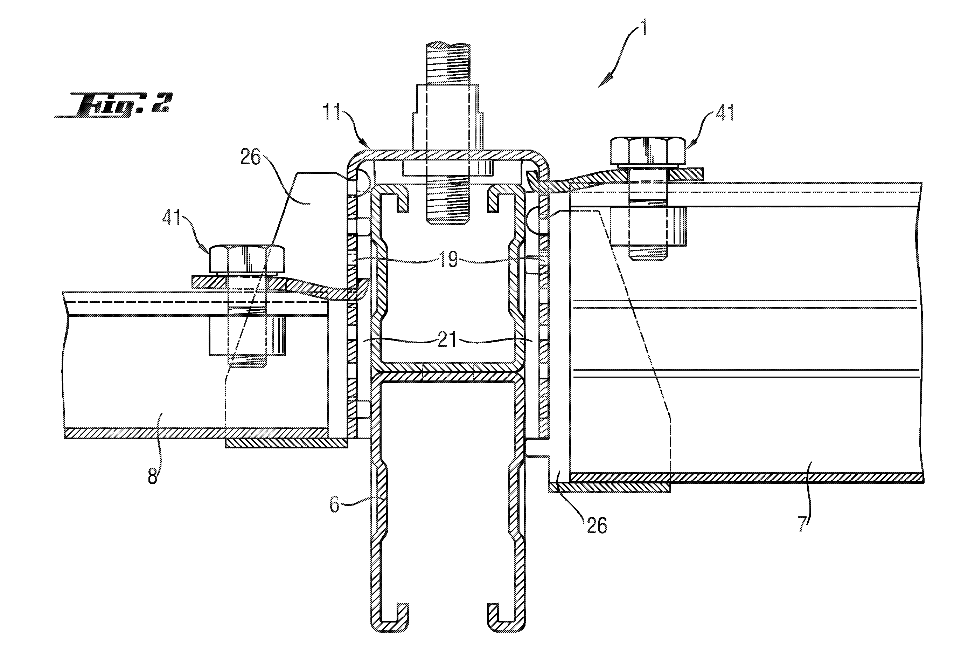

Die in der Figur 2 gezeigte Verbindungsvorrichtung 1 zum Verbinden zweier Montageschienen 7 und 8 an der Montageschiene 6 umfasst ebenfalls das Mittelteil 11 und zwei Aufnahmeelemente 26 sowie zwei, in das Mittelteil 11 einrenkbare Fixierelemente 41. Die zu verbindenden Montageschienen 6, 7 und 8 weisen unterschiedliche Höhenerstreckungen auf. Die Aufnahmeelemente 26 sind in unterschiedlich zu dem Verbindungsabschnitt des Mittelteils 11 beabstandeten Elementaufnahmen 18 eingerenkt.

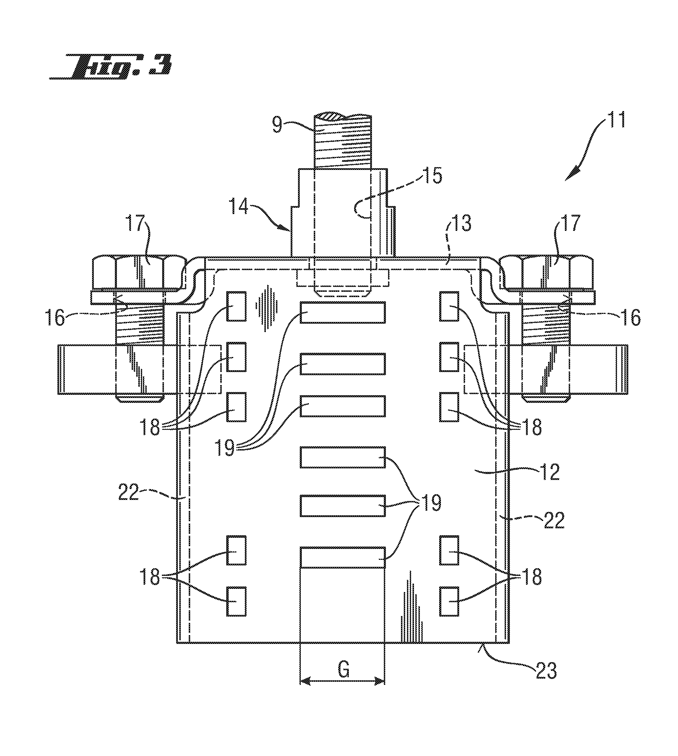

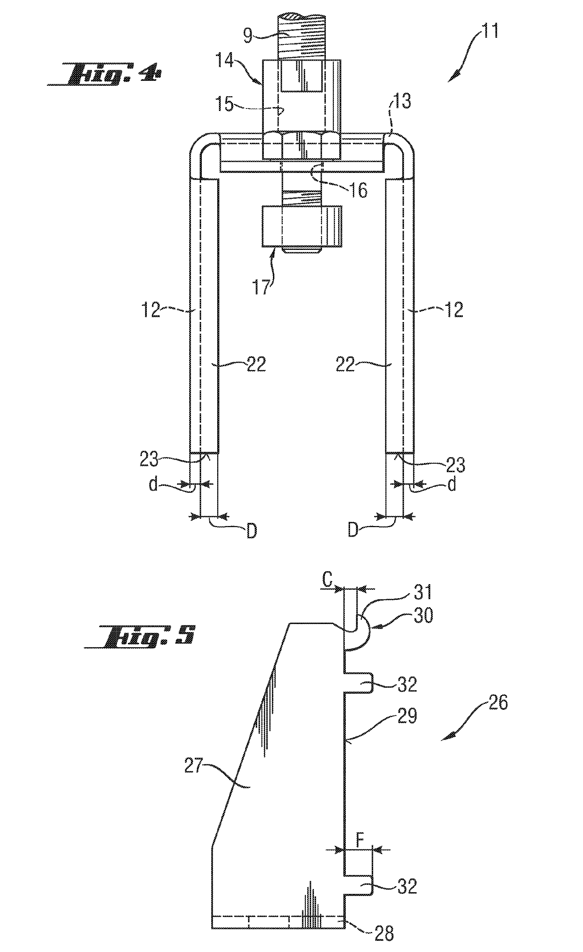

Das in den Figuren 3 und 4 als Einzelteil dargestellte Mittelteil 11 ist im Querschnitt U-förmig ausgebildet und weist zwei im Wesentlichen parallel zueinander ausgerichtete Schenkel 12 sowie einen, die beiden Schenkel 12 verbindenden Verbindungsabschnitt 13 auf. An dem Verbindungsabschnitt 13 ist eine Aufnahme 14 für ein Abspannmittel 9 vorgesehen. Die Aufnahme 14 weist als Gewindeabschnitt 15 ein Innengewinde auf für den Anschluss der Verbindungsvorrichtung 1 an dem Abspannmittel 9, welches einen Anschlussbereich mit einem in das Innengewinde in der Aufnahme 14 in Eingriff bringbares Aussengewinde aufweist. An dem Verbindungsabschnitt 13 des Mittelteils 11 sind zwei Durchführöffnungen 16 zur Durchführung zweier Befestigungsmittel 17, wie beispielsweise Schienenmuttern oder Schrauben mit einer, in eine Montageschiene 2 bzw. 6 einführbaren und verriegelbaren Hintergreifmutter, vorgesehen.

An beiden Schenkeln 12 des Mittelteils 11 sind mehrere zueinander beabstandete und einander gegenüberliegende Elementaufnahmen 18 vorgesehen, wobei diese paarweise und parallel zu der von dem Verbindungsabschnitt 13 des Mittelteils 11 gebildeten Ebene zur Aufnahme des Aufnahmeelementes 26 ausgerichtet sind. Die Elementaufnahmen 18 weisen einen rechteckigen Querschnitt auf und sind als Durchbrüche mit stirnseitigen Rändern ausgebildet. Die Abstände der Elementaufnahmen 18 untereinander und von dem Verbindungsabschnitt 13 des Mittelteils 11 in Richtung der Längserstreckung der Schenkel 12 sind variabel und von den Typen von Montageschienen 3, 4 bzw. 7, 8 abhängig, welche für ein Einlegen in die Aufnahmeelemente 26 vorgesehen sind. Entsprechend der gewünschten Ausrichtung der in die Aufnahmeelemente 26 einzulegenden Montageschienen 3, 4 bzw. 7, 8 wird das Aufnahmeelement 26 in die entsprechenden Elementaufnahmen 18 eingerenkt.

Des Weiteren sind an beiden Schenkeln 12 des Mittelteils 11 mehrere zueinander beabstandete, schlitzförmige Fixieraufnahmen 19 vorgesehen, wobei diese parallel zu der von dem Verbindungsabschnitt 13 des Mittelteils 11 gebildeten Ebene zur Aufnahme des Fixierelementes 41 ausgerichtet sind. Die Fixieraufnahmen 19 weisen einen rechteckigen Querschnitt auf und sind als Durchbrüche mit stirnseitigen Rändern ausgebildet. Entsprechend der Höhenerstreckung der, in das Aufnahmeelement 26 eingelegten Montageschiene 3 oder 4 bzw. 7 oder 8 wird das Fixierelement 41 in die entsprechende Fixieraufnahme 19 eingerenkt.

Zur Schaffung von Freiräumen 21 zwischen den Schenkeln 12 des Mittelteils 11 und den Seitenwänden der Montageschiene 2 bzw. 6 für das Einrenken der Einrenkmittel des Aufnahmeelementes sowie für das Einrenken der Einrenkabschnitte 42 der Fixierelemente 41 sind an den Schenkeln 12 des Mittelteils 11 Distanzabschnitte 22 ausgeformt, welche einander zugewandt an den Schenkeln 12 ausgerichtet sind und eine Erstreckung D aufweisen.

Das Aufnahmeelement 26 ist im Querschnitt U-förmig ausgebildet und weist zwei im Wesentlichen parallel zueinander ausgerichtete Schenkel 27 sowie einen, die beiden Schenkel 27 verbindenden Verbindungsabschnitt 28 auf. An den Rändern 29 der beiden Schenkel 27 ist jeweils ein, dem anderen Einrenkmittel 30 gegenüberliegendes Einrenkmittel 30 zum Einrenken des Aufnahmeelements 26 in zwei Elementaufnahmen 18 vorgesehen. Die Einrenkmittel 30 sind an dem, von dem Verbindungsabschnitt 28 des Aufnahmeelementes 26 abgewandten Endbereich der Schenkel 27 angeordnet. Die Einrenkmittel 30 liegen jeweils in den, von den Schenkeln 27 gebildeten Ebenen und weisen eine hakenförmige Ausgestaltung auf. Das freie Ende 31 der Einrenkmittel 30 ist von der Ebene, die durch den Verbindungsabschnitt 28 des Aufnahmeelementes 26 gebildet wird, abgewandt ausgerichtet. Der Abstand C des freien Endes 31 des Einrenkmittels 30 zum Rand 29 des Schenkels 27 beträgt für ein einfaches Einrenken des Aufnahmeelementes 26 an dem Schenkel 12 des Mittelteils 11 etwas mehr als die Wandstärke d der Schenkel 12 des Mittelteils 11.

An dem Rand 29 von den beiden Schenkeln 27 sind des Weiteren jeweils zwei, zapfenförmig ausgebildete Eingreifmittel 32 für einen Eingriff in die Elementaufnahmen 18 oder zur Anlage des Auflageelementes 26 an einer Seitenwand der ersten Montageschiene 2 bzw. 6. vorgesehen, welche in der von den Schenkeln 27 gebildeten Ebene liegen. Die Erstreckung F der Eingreifmittel 32 vom Rand 29 in der Ebene, die durch den Schenkel 27 gebildet wird, entspricht etwa der Summe aus der Wandstärke d der Schenkel 12 des Mittelteils 11 und der Erstreckung D der Distanzabschnitte 22 von der Innenseite des Schenkels 12 des Mittelteils 11. Der Abstand der Eingreifmittel 32 zueinander ist derart gewählt, dass bei einer Anordnung des Aufnahmeelementes 26 in einer oberen, dem Verbindungsabschnitt 13 des Mittelteils 11 zugewandten Elementaufnahme 18 an dem Schenkel 12 des Mittelteils 11 diese in die, weiter von dem Verbindungsabschnitt 13 des Mittelteils 11 abgewandten Elementaufnahmen 18 eingreifen oder ausserhalb des freien Randes 23 des Schenkels 12 des Mittelteils 11 zu liegen kommen.

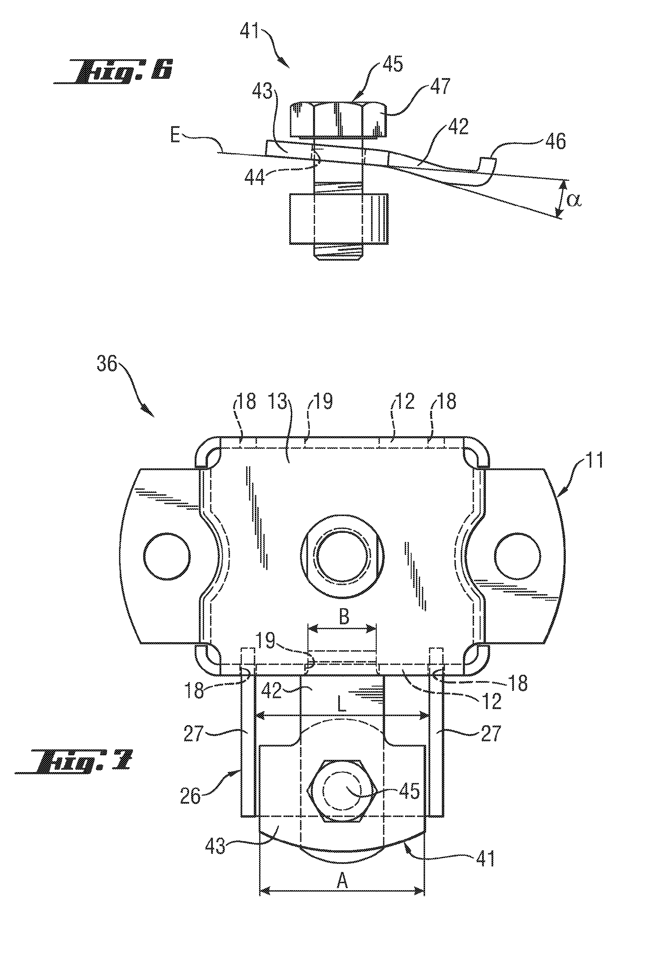

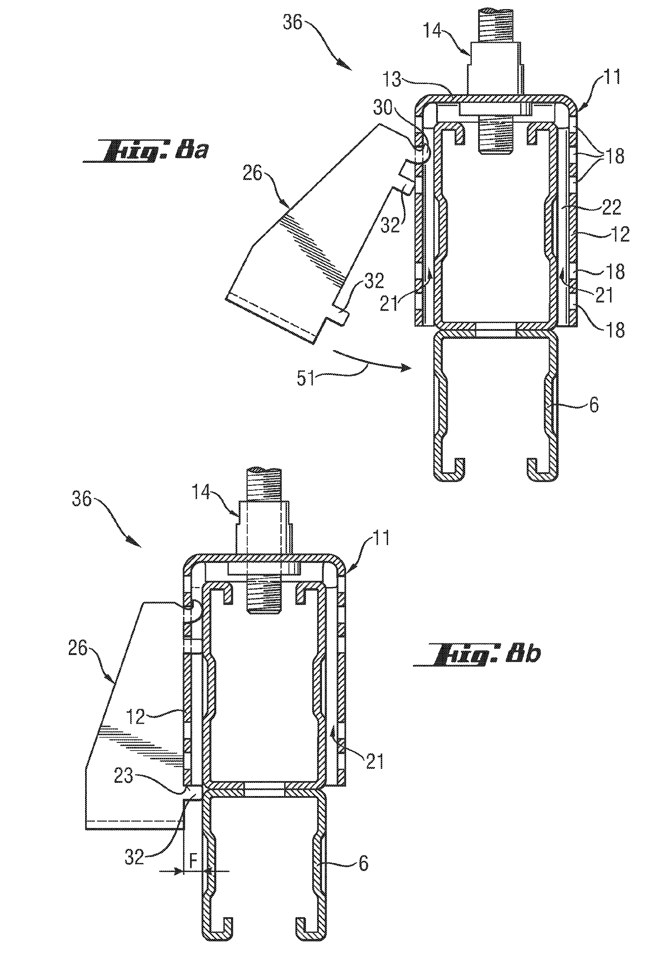

Das in der Figur 6 ist gezeigte Fixierelement 41 weist einen Einrenkabschnitt 42 und einen Anlageabschnitt 43 auf. Die Durchführöffnung 44 für das Befestigungsmittel 45, hier eine Schienenmutter, ist im Anlageabschnitt 43 angeordnet. Mittels des Befestigungsmittels 45, welches durch die Durchführöffnung 44 in dem Fixierelement 41 hindurchgeführt ist, wird die, in das Aufnahmeelement 26 eingelegte Montageschiene 3, 4 bzw. 7, 8 mit der Verbindungsvorrichtung 1 verspannt.

Der Einrenkabschnitt 42 weist eine kleinere Breite B als die Breite A des Anlageabschnitts 43 auf, wobei die Breite B des Einrenkabschnitts 42 ebenfalls kleiner als die Breite G der Fixieraufnahmen 19 an den Schenkeln 12 des Mittelteils ausgebildet ist. Die Breite A des Anlageabschnitts 43 entspricht maximal der lichten Breite L zwischen den Schenkeln 27 des Aufnahmeelementes 26 und etwa der Breite der mit dem Fixierelement 41 zu fixierenden Montageschiene 3, 4 bzw. 7, 8. Der Einrenkabschnitt weist ein freies Ende 46 auf, welches im Längsschnitt des Fixierelementes 41 hakenförmig ausgebildet und von der Ebene E, die durch den Anlageabschnitt 43 des Fixierelementes 41 gebildet wird, abgewandt ausgerichtet ist. Der Einrenkabschnitt 42 ist in einem Winkel α von 12° zu der Ebene E abgewinkelt, welche durch den Anlageabschnitt 43 gebildet wird.

In den Figuren 8a und 8b ist der Montagevorgang des Einrenkens eines Aufnahmeelementes 26 an dem Mittelteil 11 zur Erstellung einer erfindungsgemässen Verbindungsvorrichtung 36 an der Montageschiene 6 in zwei Montagezuständen dargestellt. Das Mittelteil 11 wird auf die Montageschiene 6 aufgesetzt und entlang dieser verschoben, bis die gewünschte Position zur Erstellung der Verbindungsvorrichtung 36 an der Montageschiene 6 erreicht ist. Mittels der Befestigungsmittel 17 wird das Mittelteil 11 mit der Montageschiene 6 verspannt.

Anschliessend wird das Aufnahmeelement 26 mit dem Einrenkmittel 30 in die Aufnahme 18 an dem Schenkel 12 des Mittelteils eingeführt, welche der gewünschten Höhenausrichtung der in das Aufnahmeelement 26 einzulegenden Montageschiene 3, 4 bzw. 7, 8 entspricht. Durch eine rotatorische Bewegung in Richtung des Pfeils 51 wird das Aufnahmeelement 26 mit der Seitenwand der Montageschiene 6 beziehungsweise mit dem Schenkel 12 des Mittelteils 11 in Anlage gebracht. Dabei greift das obere Eingreifmittel an dem Aufnahmeelement 26 in die Elementaufnahme 18 ein, welche der Elementaufnahme 18 benachbart ist, in welcher das Einrenkmittel 30 eingeführt wurde. Das untere Eingreifmittel 32 kommt unterhalb des freien Endes 23 des Schenkels 12 des Mittelteils 11 zu liegen.

Eine mit der Montageschiene 6 zu verbindende Montageschiene kann nun in das Aufnahmeelement eingelegt und sofern erforderlich mit einem, in den Schenkel 12 des Mittelteils 11 entsprechend der Höhenerstreckung dieser Montageschiene in eine Fixieraufnahme 19 eingerenkten Fixierelementes 41 mit der Verbindungsvorrichtung 36 lösbar verspannt werden.

## Patentansprüche

1. Verbindungsvorrichtung zum Verbinden von Montageschienen (2, 3, 4; 6, 7, 8) im Kreuzstoss mit einem Mittelteil (11) und mit zumindest einem, mit dem Mittelteil (11) verbindbaren Aufnahmeelement (26), wobei das Mittelteil (11) zwei im Wesentlichen parallel zueinander ausgerichtete Schenkel (12) und einen die beiden Schenkel (12) verbindenden Verbindungsabschnitt (13) zum zumindest teilweisen Umgreifen einer ersten Montageschiene (2; 6) aufweist, und wobei das zumindest eine Aufnahmeelement (26) zwei im Wesentlichen parallel zueinander ausgerichtete Schenkel (27) und einen die beiden Schenkel (27) verbindenden Verbindungsabschnitt (28) aufweist, in das eine zweite, mit der ersten Montageschiene (2; 6) auf Stoss zu befestigende Montageschiene (3, 4; 7, 8) einlegbar ist, wobei an zumindest einem der Schenkel (12) des Mittelteils (11) mehrere zueinander beabstandete und einander gegenüberliegende Elementaufnahmen (18) für die Aufnahme des zumindest einen Aufnahmeelementes (26) vorgesehen sind, **dadurch gekennzeichnet, dass** das zumindest eine Aufnahmeelement (26) über eine Einrenkverbindung mit dem Mittelteil (11) verbindbar ist.

2. Verbindungsvorrichtung nach Anspruch 1, **dadurch gekennzeichnet, dass** jeweils zumindest ein Einrenkmittel (30) an jedem Schenkel (27) des zumindest einen Aufnahmeelementes (26) vorgesehen ist, wobei die Einrenkmittel (30) einander gegenüberliegend angeordnet sind und eine im Wesentlichen hakenförmige Ausgestaltung für ein Hintergreifen des zumindest einen Schenkel (12) des Mittelteils (11) zur Schaffung der Einrenkverbindung mit dem Mittelteil (11) aufweisen, wobei vorzugsweise das freie Ende (31) des hakenförmig ausgestalteten Einrenkmittels (30) von der Ebene, die durch den Verbindungsabschnitt (28) des Aufnahmeelementes (26) gebildet wird, abgewandt ausgerichtet ist.

3. Verbindungsvorrichtung nach Anspruch 2, **dadurch gekennzeichnet, dass** die Einrenkmittel (30) an einem Rand (29) der Schenkel (27) des Aufnahmeelementes (26) und jeweils in der, von den Schenkeln (27) gebildeten Ebene angeordnet sind.

4. Verbindungsvorrichtung nach einem der Ansprüche 1 bis 3, **dadurch gekennzeichnet, dass** mehrere Eingreifmittel (32) an den Schenkeln (27) des zumindest einen Aufnahmeelementes (26) zur Schaffung einer Rastverbindung zwischen dem zumindest einen Aufnahmeelement (26) und dem Mittelteil (11) vorgesehen sind, wobei die Eingreifmittel (32) optional zapfenförmig ausgebildet und vorzugsweise an den Rändern (29) der Schenkel (27) des zumindest einen Aufnahmeelementes (26), optional in der Ebene, die von den Schenkeln (27) des Aufnahmeelementes (26) gebildet wird, vorgesehen sind.

5. Verbindungsvorrichtung nach einem der Ansprüche 1 bis 4, **dadurch gekennzeichnet, dass** die Verbindungsvorrichtung (1; 36) weiter ein Fixierelement (41) beinhaltet, das an dem Mittelteil (11) der Verbindungsvorrichtung (1; 36) festlegbar ist und mittels eines Befestigungsmittels (45) die zweite Montageschiene (3, 4; 7, 8) mit der Verbindungsvorrichtung (1; 36) verspannt, wobei an zumindest einem der Schenkel (12) des Mittelteils (11) mehrere zueinander beabstandete und schlitzartig ausgebildete Fixieraufnahmen (19) für das Fixierelement (41) zur Fixierung von in der Höhe unterschiedlich ausgebildeten und in das zumindest eine Aufnahmeelement (26) eingelegten Montageschienen (3, 4; 7, 8) vorgesehen sind, wobei das Fixierelement (41) mittels einer Einrenkverbindung mit dem Mittelteil (11) verbindbar ist.

6. Verbindungsvorrichtung nach Anspruch 5, **dadurch gekennzeichnet, dass** das Fixierelement (41) einen Einrenkabschnitt (42), zur Schaffung der Einrenkverbindung zwischen dem Fixierelement (41) und dem Mittelteil (11), und einen Anlageabschnitt (43) aufweist, zur Anlage des Fixierelementes (41) an der zu verbindenden Montageschiene (3, 4; 7, 8), wobei der Einrenkabschnitt (42) optional hakenförmig ausgestaltet und vorzugsweise von der Seite des Anlageabschnitts (43) abgewandt ist, an welcher ein Angreifmittel (47) für das Befestigungsmittel (45) anliegt.

7. Verbindungsvorrichtung nach Anspruch 6, **dadurch gekennzeichnet, dass**, der Einrenkabschnitt (42) eine kleinere Breite (B) als die Breite (A) des Anlageabschnitts (43) aufweist.

8. Verbindungsvorrichtung nach Anspruch 6 oder 7, **dadurch gekennzeichnet, dass** der Einrenkabschnitt (42) gegenüber einer Ebene (E), die durch den Anlageabschnitt (43) gebildet ist, in einem Winkel α von 0° bis 25 °, vorzugsweise in einem Winkel α von 5° bis 15 °, abgewinkelt ist.

9. Verbindungsvorrichtung nach einem der Ansprüche 1 bis 8, **dadurch gekennzeichnet, dass** das Mittelteil (11) an dessen Verbindungsabschnitt (13) eine Aufnahme für ein Abspannelement, vorzugsweise eine mit einem Gewindeabschnitt (15) versehene Aufnahme (14), aufweist.

10. Verbindungsvorrichtung nach einem der Ansprüche 1 bis 9, **dadurch gekennzeichnet, dass** an den Schenkeln (12) des Mittelteils (11) einander zugewandte Distanzabschnitte (22) zur Schaffung eines Freiraums (21) für die Einrenkmittel (30) eines mit dem Mittelteil (11) verbindbaren Aufnahmeelementes (26) ausgebildet sind.
